# EUROPEAN PATENT SPECIFICATION

(11) **EP 3 176 003 B1**
(45) Date of publication and mention of the grant of the patent: **12.09.2018**
(21) Application number: 15827589.1
(22) Date of filing: 24.07.2015
(51) Int. Cl.: B60C 9/02, B60C 15/00, B29D 30/72, B60C 9/04, B60C 9/14, B29D 30/08, B29D 30/48

(54) **TIRE**
REIFEN
PNEU

(30) Priority: 30.07.2014 JP 2014155165
(43) Date of publication of application: 07.06.2017
(73) Proprietor: Bridgestone Corporation, Tokyo 104-8340 (JP)
(72) Inventor: KON, Seiji, Tokyo 104-8340 (JP); KOUNO, Yoshihide, Tokyo 104-8340 (JP); HASEGAWA, Keiichi, Tokyo 104-8340 (JP)
(74) Representative: Oxley, Robin John George
(86) International application number: PCT/JP2015/071154
(87) International publication number: WO 2016/017556

(56) References cited:
- JP-A- H 058 615
- JP-A- S5 539 398
- JP-A- S6 042 105
- JP-A- H03 143 701
- JP-A- S58 212 931
- JP-A- S61 220 903
- JP-A- 2009 039 901
- JP-A- 2009 039 901
- JP-A- 2010 188 633
- JP-A- 2010 188 633
- JP-A- 2012 061 893
- US-A- 4 090 547
- US-A- 4 711 284

## Description

### TECHNICAL FIELD

The present invention relates to a tire in which a tire carcass member is formed using a resin material.

### BACKGROUND ART

With a view to reducing weight and facilitating recycling, thermoplastic resins, thermoplastic elastomers and the like have been proposed for use as tire materials. For example, Japanese Patent Application Laid-Open (JP-A) No. H3-143701 discloses a pneumatic tire in which a tire main body is molded using a thermoplastic polymer material. Reference is also made to US 4711284 A, which discloses a pneumatic tire produced of elastomers, JP 2010-188633 A, which discloses a tire and a method of manufacturing the same and JP 2009-039901 A, which discloses a manufacturing method of a pneumatic tire.

### SUMMARY OF INVENTION

### TECHNICAL PROBLEM

In the pneumatic tire disclosed in JP-A No. H3-143701, stiffness is raised by providing a reinforcing layer at a tread floor portion. However, if the thickness of a tire main body is reduced in order to lower weight and reduce longitudinal springiness of the tire, pressure resistance and cut resistance are lowered.

In consideration of the circumstances described above, an object of the present invention is to provide a tire that may improve pressure resistance and cut resistance.

### SOLUTION TO PROBLEM

A tire according to a first aspect of the present invention includes: a tire carcass member fabricated of resin that includes: a bead portion covering a bead core, a side portion extending to a tire radius direction outer side from the bead portion, and a crown portion extending to a tire width direction inner side from the side portion; and a reinforcing layer provided with a plurality of cords that are covered with resin or rubber, the reinforcing layer extending from the bead portion of the tire carcass member toward the side portion and covering at least an outer periphery face of the side portion.

According to the structure described above, because the reinforcing layer extending from the bead portion to the side portion covers the outer periphery face of the side portion of the tire carcass member, even if the tire carcass member is reduced in thickness, reductions in pressure resistance and cut resistance may be suppressed.

In a tire according to a second aspect of the present invention, in the tire according to the first aspect, an end portion at a tire radius direction inner side of the reinforcing layer extends at least to a position that overlaps in a tire width direction with a rim to which the tire carcass member is to be assembled.

According to the structure described above, because the end portion at the tire radius direction inner side of the reinforcing layer extends to the position that overlaps with the rim in the tire width direction, tensions arising in the tire carcass member may be borne by the reinforcing layer. Therefore, the pressure resistance may be improved.

In a tire according to a third aspect of the present invention, in the tire according to the second aspect, the end portion at the tire radius direction inner side of the reinforcing layer extends from the outer periphery face of the side portion across an outer periphery face of the bead portion to an inner periphery face of the bead portion.

According to the structure described above, because the end portion at the tire radius direction inner side of the reinforcing layer extends from the outer periphery face of the side portion across the outer periphery face of the bead portion to the inner periphery face of the bead portion, more of tensions arising in the tire carcass member may be borne by the reinforcing layer. Therefore, the pressure resistance may be further improved.

In a tire according to a fourth aspect of the present invention, in the tire according to any one of the first to third aspects, the reinforcing layer extends from the bead portion of the tire carcass member to a corresponding outer periphery face of the crown portion.

According to the structure described above, two of the reinforcing layer extend from bead portions of the tire carcass member to the respective outer periphery faces of the crown portion. In this structure, a tread rubber is disposed at the outer periphery faces of the crown portions. Accordingly, the reinforcing layers are sandwiched between the tire carcass member and the tread rubber. Therefore, more tension may be borne by the reinforcing layers; thus, the pressure resistance may be improved.

In a tire according to a fifth aspect of the present invention, in the tire according to the fourth aspect, an end portion at the tire radius direction outer side of the reinforcing layer is superposed with itself.

According to the structure described above, because the end portion at the tire radius direction outer side of the reinforcing layer is superposed with itself, the cut resistance may be improved. Further, more tension may be borne by the reinforcing layer; therefore, the pressure resistance may be further improved.

In a tire according to a sixth aspect of the present invention, in the tire according to the fourth aspect or the fifth aspect, a crown reinforcing layer is provided at the tire radius direction outer side of the crown portion, and the crown reinforcing layer is superposed with an end portion at the tire radius direction outer side of the reinforcing layer.

According to the structure described above, because the end portion at the tire radius direction outer side of the reinforcing layer is superposed with the crown reinforcing layer, the cut resistance may be improved. Further, more tension may be borne by the reinforcing layer and the crown reinforcing layer; therefore, the pressure resistance may be improved.

In a tire according to a seventh aspect of the present invention, in the tire according to any one of the first to sixth aspects, a plurality of notches in the tire radius direction are formed in an end portion at a tire radius direction inner side of the reinforcing layer.

According to the structure described above, the plural notches are formed in the end portion at the tire radius direction inner side of the reinforcing layer. Therefore, the reinforcing layer is superposed with itself in the region of the notches at the bead side at which the diameter is smaller during molding. Consequently, the formation of creases in the reinforcing layer may be suppressed.

In a tire according to an eighth aspect of the present invention, in the tire according to any one of the first to seventh aspects, the plurality of cords of the reinforcing layer respectively extend in a radial direction and are arrayed in a tire circumferential direction, and lengths of the plurality of cords vary periodically along a tire circumferential direction.

According to the structure described above, the lengths of the cords extending in the radial direction vary periodically along the tire circumferential direction. That is, the reinforcing layer includes regions with shorter cords and regions with longer cords. Consequently, the formation of creases in the reinforcing layer at the bead side at which the diameter is smaller may be suppressed during molding.

In a tire according to a ninth aspect of the present invention, in the tire according to any one of the first to eighth aspects, a rubber covering layer is provided at an outer periphery face of the reinforcing layer, the rubber covering layer extending from the bead portion to the crown portion.

According to the structure described above, because the rubber covering layer is provided at the outer periphery face of the reinforcing layer, ultraviolet degradation of the reinforcing layer may be suppressed by the rubber covering layer. Further, because adhesiveness of the rubber covering layer to the reinforcing layer and the tread rubber is high, durability of the tire may be improved.

In a tire according to a tenth aspect of the present invention, in the tire according to any one of the first to ninth aspects, a crown support layer is provided at an outer periphery face of the tire carcass member, the crown support layer being provided with a plurality of cords covered with resin, and the crown support layer being disposed so as to extend across a central portion in the tire width direction of the tire carcass member.

According to the structure described above, the crown support layer is provided to extend across the central portion in the tire width direction of the tire carcass member. Thus, durability of the tire may be improved by the crown support layer being provided at the central portion in the tire width direction, at which tensile stress caused by flexing when the tire rides over a projection on a road surface or the like is greatest.

### ADVANTAGEOUS EFFECTS OF INVENTION

According to an aspect of the present invention, a tire may be provided in which pressure resistance and cut resistance may be improved.

### BRIEF DESCRIPTION OF DRAWINGS

Fig. 1 is a perspective sectional view showing a portion of a tire according to a first exemplary embodiment of the present invention.
Fig. 2 is a sectional diagram showing one side of a section cut along a tire axial direction of the tire according to the first exemplary embodiment of the present invention.
Fig. 3 is a plan view showing a reinforcing layer of a tire according to a second exemplary embodiment of the present invention.
Fig. 4 is a perspective sectional view showing a portion of the tire according to the second exemplary embodiment of the present invention.
Fig. 5 is a sectional diagram showing one side of a section cut along the tire axial direction of the tire according to the second exemplary embodiment of the present invention.
Fig. 6 is a plan view showing a reinforcing layer of a tire according to a third exemplary embodiment of the present invention.
Fig. 7 is a perspective sectional view showing a portion of the tire according to the third exemplary embodiment of the present invention.
Fig. 8 is a sectional diagram showing one side of a section cut along the tire axial direction of the tire according to the third exemplary embodiment of the present invention.

### DESCRIPTION OF EMBODIMENTS

### - First Exemplary Embodiment -

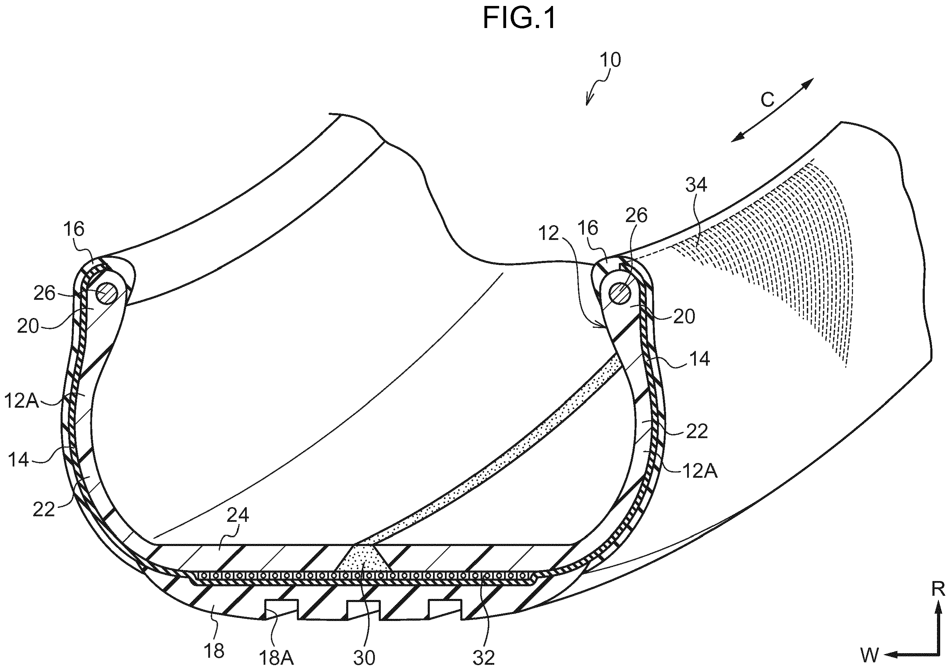

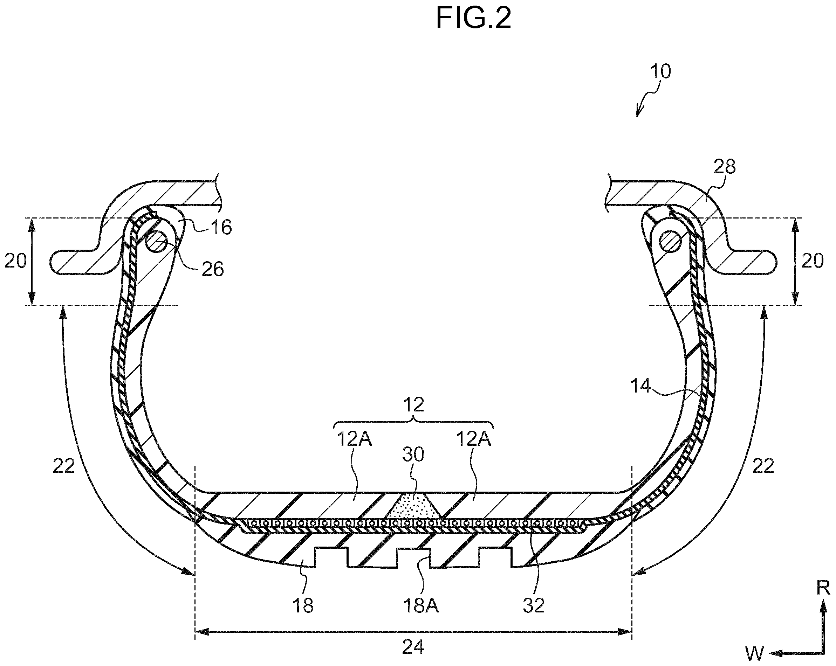

Below, a first exemplary embodiment of the present invention is described with reference to Fig. 1 and Fig. 2. Arrow W in the drawings indicates a direction (below referred to as "the tire width direction") parallel to a rotation axis of the tire, and arrow R indicates a direction (below referred to as the "tire radius direction") that passes through the rotation axis of the tire and is orthogonal to the tire width direction. Arrow C indicates a circumferential direction (below referred to as "the tire circumferential direction") of a circle centered on the rotation axis of the tire. The term "radial direction" refers to directions orthogonal to the tire circumferential direction, including the tire radius direction and the tire width direction.

As shown in Fig. 1 and Fig. 2, a tire 10 according to the first exemplary embodiment is provided with a tire carcass member 12, a reinforcing layer 14, covering rubber layers (rubber covering layers) 16 and a tread rubber 18.

The tire carcass member 12 is molded of a resin material, and is formed in an annular shape by a pair of tire pieces 12A being bonded together in the tire axis direction. Note that the tire carcass member 12 may be formed by bonding three or more of the tire pieces 12A.

The tire carcass member 12 includes a pair of bead portions 20, a pair of side portions 22 that respectively extend to the tire radius direction outer side from the pair of bead portions 20, and a crown portion 24 that extends to tire width direction inner sides from the side portions 22.

Herein, the term "bead portions 20" refers to the tire carcass member 12 from the tire radius direction inner side ends thereof to 30% of a tire sectional height, and the term "crown portion 24" refers to a region of the tire carcass member 12 at which the tread rubber 18 is disposed.

A thermoplastic resin, thermoplastic elastomer (TPE), thermosetting resin or the like with a resilience equivalent to rubber may be employed as the resin material constituting the tire carcass member 12. Considering resilience during running and moldability during fabrication, it is desirable to employ a thermoplastic elastomer. The whole of the tire carcass member 12 may be formed of this resin material, or just a portion of the tire carcass member 12 may be formed of this resin material.

As a thermoplastic elastomer, polyolefin-based thermoplastic elastomers (TPO), polystyrene-based thermoplastic elastomers (TPS), polyamide-based thermoplastic elastomers (TPA), polyurethane-based thermoplastic elastomers (TPU), polyester-based thermoplastic elastomers (TPC), dynamically vulcanized thermoplastic elastomers (TPV) and the like may be mentioned.

As a thermoplastic resin, polyurethane resins, polyolefin resins, vinyl chloride resins, polyamide resins and the like may be mentioned. For example, a thermoplastic resin that may be employed has a deflection temperature under load as defined in ISO 75-2 or ASTM D648 (with a 0.45 MPa load) of at least 78°C, a tensile yield strength as defined in JIS K7113 of at least 10 MPa, a tensile elongation at break as defined in JIS K7113 of at least 50%, and a Vicat softening temperature as defined in JIS K7206 (method A) of at least 130°C.

A bead core 26 is embedded in each bead portion 20 of the tire carcass member 12. A metal, organic fiber, organic fiber covered with resin, hard resin or the like may be employed as a material constituting the bead core 26. Note that the bead core 26 may be omitted provided stiffness of the bead portion 20 is assured and there is no problem with fitting to a rim 28, which is shown in Fig. 2.

A bonding member 30 fabricated of resin is provided at a central portion in the tire width direction of the crown portion 24, between the pair of tire pieces 12A of the tire carcass member 12. The bonding member 30 is formed in a substantially trapezoid shape in a sectional view. The pair of tire pieces 12A are joined to one another by being bonded to two side faces of the bonding member 30.

A thermoplastic resin of the same type or a different type from the tire pieces 12A, or a molten resin or the like may be employed for the bonding member 30. Further, the tire pieces 12A may be continuously joined without the bonding member 30 being used.

In this case, a hot plate welding method, in which a hot plate is sandwiched between end portions of the tire pieces 12A and the end portions are fused to one another by being pushed in directions towards one another while the hot plate is being removed, or a method of adhering the tire pieces 12A to one another with an adhesive may be used.

A belt layer 32 is provided at an outer periphery face of the crown portion 24. The belt layer 32 is formed by, for example, winding cords covered with resin in helical patterns along the tire circumferential direction.

The reinforcing layer 14 is provided with plural reinforcing cords 34 covered with rubber. The reinforcing layer 14 is disposed to extend from an outer periphery face of one of the bead portions 20 of the tire carcass member 12 to an outer periphery face of the side portion 22, along the outer periphery face of the belt layer 32, to an outer periphery face of the other bead portion 20.

The reinforcing layer 14 is disposed to extend all the way round the tire circumferential direction. In the present exemplary embodiment, two end portions of the reinforcing layer 14 extend to the respective tire radius direction inner side ends of the tire carcass member 12. However, it is sufficient that the two end portions extend at least to positions coinciding with the rim 28 in the tire width direction.

The reinforcing cords 34 are monofilaments (single strands) of organic fiber or multifilaments (twisted strands) in which organic fibers are twisted together. The reinforcing cords 34 respectively extend in a radial direction and are arrayed in the tire circumferential direction. The reinforcing cords 34 may be inclined at angles in a range within 10° with respect to the radial direction.

A material such as a nylon, PET, glass, aramid or the like may be employed for the organic fibers. Further, a metal such as steel or the like may be employed for the material of the reinforcing cords 34. The reinforcing layer 14 may have a structure in which the cords are covered with a resin rather than rubber.

A pair of the covering rubber layer 16 are provided at outer periphery faces of the reinforcing layer 14. Each covering rubber layer 16 extends from the bead portion 20 of the tire carcass member 12 to the tire width direction outer side of the crown portion 24. The covering rubber layers 16 may employ a rubber of the same type as a rubber that is employed for the sidewalls of a conventional pneumatic tire fabricated of rubber.

The end portion at the tire radius direction inner side of each covering rubber layer 16 extends to an inner periphery face of the respective bead portion 20 of the tire carcass member 12. Thus, the two end portions of the reinforcing layer 14 are covered by the covering rubber layer 16.

The tread rubber 18 serving as a tread layer is disposed at the tire radius direction outer side of the crown portion 24 and the belt layer 32. The reinforcing layer 14, the covering rubber layers 16, the belt layer 32 and the tread rubber 18 are laminated onto the tire carcass member 12 and are then bonded by vulcanization.

The tread rubber 18 is formed of a rubber with more excellent wear endurance than the resin material forming the tire carcass member 12. The tread rubber 18 may employ a rubber of the same type as a tread rubber employed in a conventional pneumatic tire fabricated of rubber.

Grooves 18A for drainage that extend in the tire circumferential direction are formed in a tread surface of the tread rubber 18. In the present exemplary embodiment, three of the grooves 18A are formed, but this is not limiting and more of the grooves 18A may be formed. As a tread pattern, a publicly known tread pattern may be employed.

Now, operation and effects of the tire 10 according to the present exemplary embodiment are described. In the tire 10 according to the present exemplary embodiment, because the outer periphery faces of the tire carcass member 12 are covered by the reinforcing layer 14, even if the tire carcass member 12 is reduced in thickness, reductions in pressure resistance and cut resistance may be suppressed.

In specific terms, the cut resistance may be improved by the reinforcing layer 14 reinforcing the tire carcass member 12. Further, internal pressure may be assured due to a portion of tensions arising in the tire carcass member 12 being borne by the reinforcing layer 14. Therefore, the pressure resistance may be improved.

Because the reinforcing layer 14 is formed by covering the reinforcing cords 34 with rubber, processes are simple. Furthermore, because adhesiveness of the reinforcing layer 14 to covering rubber layers 16 and the tread rubber 18 is high, durability of the tire may be improved. Ultraviolet degradation of the reinforcing layer 14 may be suppressed by the covering rubber layers 16.

### - Second Exemplary Embodiment -

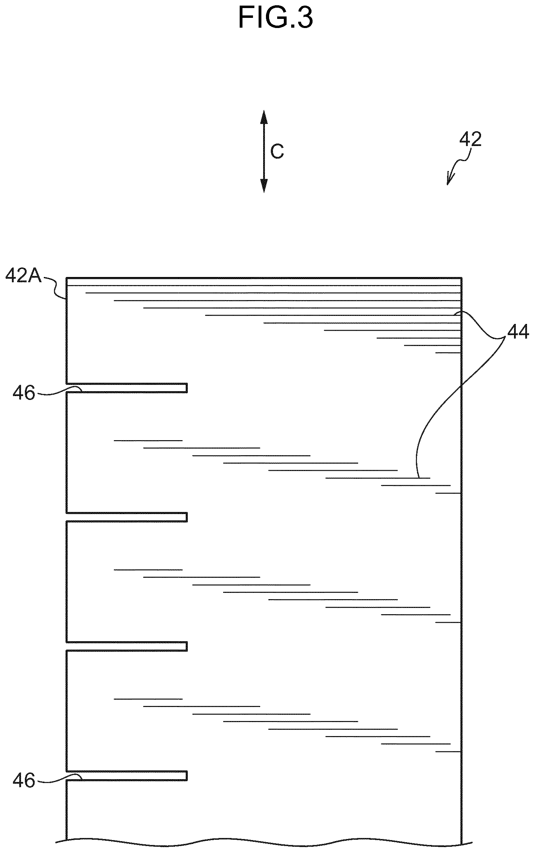

Now, a second exemplary embodiment of the present invention is described with reference to Fig. 3 to Fig. 5. Structures that are the same as in the first exemplary embodiment are assigned the same reference symbols and are not described here.

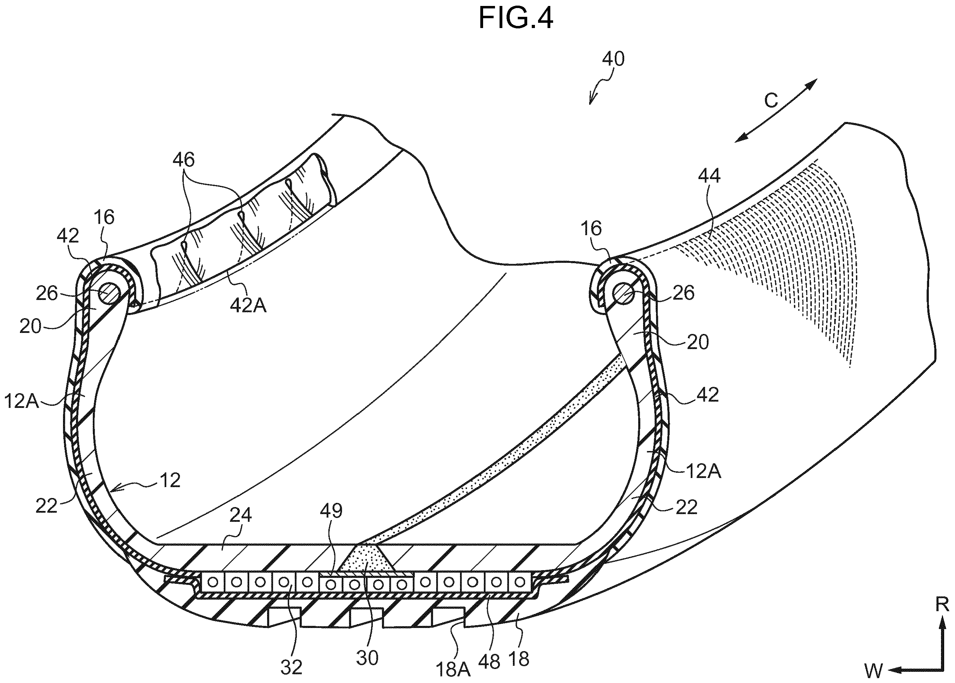

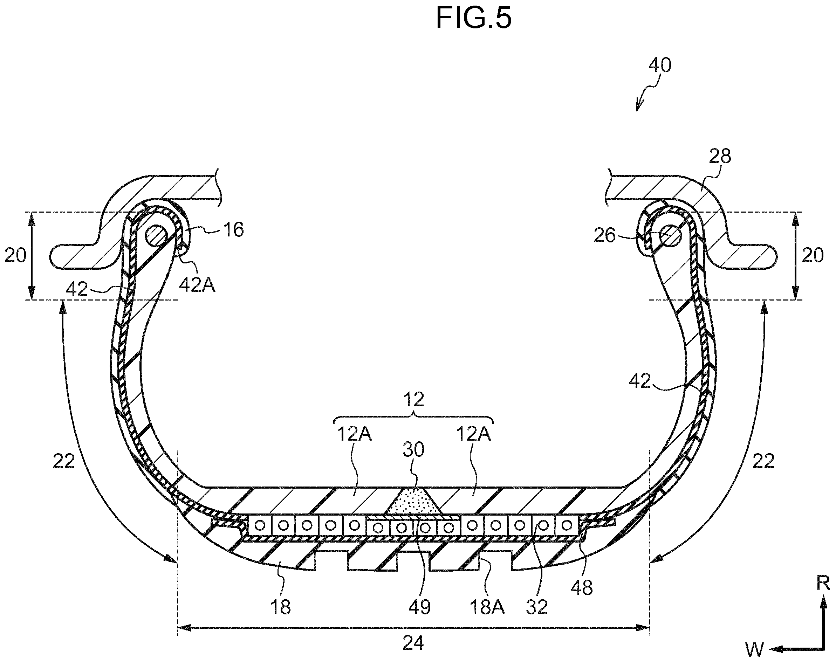

Fig. 3 shows a state in which a reinforcing layer 42 according to the present exemplary embodiment is stretched out flat before being arranged onto the tire carcass member 12. As shown in Fig. 4 and Fig. 5, a pneumatic tire 40 according to the second exemplary embodiment includes a pair of the reinforcing layer 42.

Similarly to the reinforcing layer 14 according to the first exemplary embodiment, the reinforcing layer 42 is formed by covering plural reinforcing cords 44 that extend in the radial direction with rubber. As shown in Fig. 3, plural notches 46 are formed in an end portion 42A at one side of a short direction of the reinforcing layer 42.

When the reinforcing layer 42 is being arranged onto the tire carcass member 12, the end portion 42A of the reinforcing layer 42 with the notches 46 is disposed so as to be located at the tire radius direction inner side. In specific terms, as shown in Fig. 4, the pair of reinforcing layers 42 are disposed such that the end portions 42A including the notches 46 are located at the inner periphery faces of the bead portions 20 of the tire carcass member 12.

At this time, the plural notches 46 respectively extend in the tire radius direction and the end portion 42A of each reinforcing layer 42 is superposed with one another in the region of the notches 46. The reinforcing layer 42 is bent back from the inner periphery face of the bead portion 20 to the outer periphery face of the bead portion 20 and extends to the outer periphery face of the side portion 22. An end portion at the tire radius direction outer side of the reinforcing layer 42 is located at the corresponding tire width direction outer side of the belt layer 32.

The end portion at the tire radius direction inner side of each covering rubber layer 16 extends to the inner periphery face of the corresponding bead portion 20 of the tire carcass member 12. Thus, the end portion 42A of the reinforcing layer 42 is covered by the covering rubber layer 16.

As shown in Fig. 4 and Fig. 5, a crown reinforcing layer 48 is provided at the tire radius direction outer side of the crown portion 24. The crown reinforcing layer 48 is formed by covering cords of organic fiber with rubber.

In specific terms, the crown reinforcing layer 48 extends along the outer periphery face of the belt layer 32; two end portions of the crown reinforcing layer 48 are superposed with the respective end portions at the tire radius direction outer side of the pair of reinforcing layers 42.

A crown support layer 49 is also provided between the crown portion 24 of the tire carcass member 12 and the belt layer 32. The crown support layer 49 is formed by covering cords of organic fiber, which are not shown in the drawings, with resin. As the material of the covering resin, for example, a resin similar to the resin structuring the tire carcass member 12 may be employed.

The crown support layer 49 is disposed to extend all the way round the tire circumferential direction. The crown support layer 49 is disposed so as to cover the central portion in the tire width direction of the crown portion 24, that is, to cover the bonding member 30 that is a bonding portion between the tire pieces 12A of the tire carcass member 12.

Now, operation and effects of the tire 40 according to the present exemplary embodiment are described. In the tire 40 according to the present exemplary embodiment, the plural notches 46 are formed in the end portion 42A at the tire radius direction inner side of each reinforcing layer 42.

Consequently, when the reinforcing layer 42 is being arranged onto the tire carcass member 12, the reinforcing layer 42 may be superposed with one another in the region of the notches 46 at the side at which the bead portion 20 is disposed, at which the diameter is smaller than at the side portion 22. Therefore, the formation of creases in the reinforcing layer 42 may be suppressed.

Because the end portion 42A of the reinforcing layer 42 extends from the outer periphery face of the side portion 22 across the outer periphery face of the bead portion 20 to the inner periphery face of the bead portion 20, more of tensions arising in the tire carcass member 12 may be borne by the reinforcing layer 42. Therefore, the pressure resistance may be further improved.

The crown reinforcing layer 48 is provided at the tire radius direction outer side of the crown portion 24. Transmission of an impact from the outer periphery side of the tread rubber 18 to the tire carcass member 12 may be suppressed by the crown reinforcing layer 48. Thus, the cut resistance may be improved.

The end portion at the tire radius direction outer side of each reinforcing layer 42 is superposed with the crown reinforcing layer 48. Therefore, because more tension may be borne by the reinforcing layer and the crown reinforcing layer, the pressure resistance may be improved.

The reinforcing layer 42 and the crown reinforcing layer 48 are superposed at the tire width direction outer side of the belt layer 32. However, it is sufficient that the reinforcing layer 42 and crown reinforcing layer 48 be superposed at any location at the tire radius direction outer side of the crown portion 24; the reinforcing layer 42 and the crown reinforcing layer 48 may be superposed at the outer periphery face of the belt layer 32.

The crown support layer 49 is provided between the tire carcass member 12 and the belt layer 32 so as to cover the bonding member 30. Thus, deformations may be suppressed and durability of the tire 40 may be improved by the bonding portion, at which tensile stress caused by flexing of the crown portion 24 when the tire 40 rides over a projection on a road surface or the like is greatest and which is more likely than other regions to be deformed, being covered with the crown support layer 49.

### - Third Embodiment -

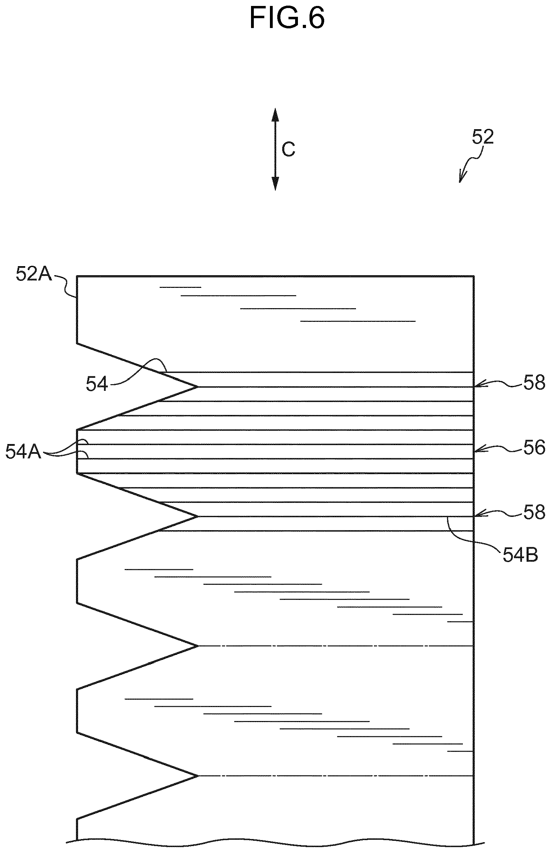

Now, a third exemplary embodiment of the present invention is described with reference to Fig. 6 to Fig. 8. Structures that are the same as in the first exemplary embodiment and the second exemplary embodiment are assigned the same reference symbols and are not described here.

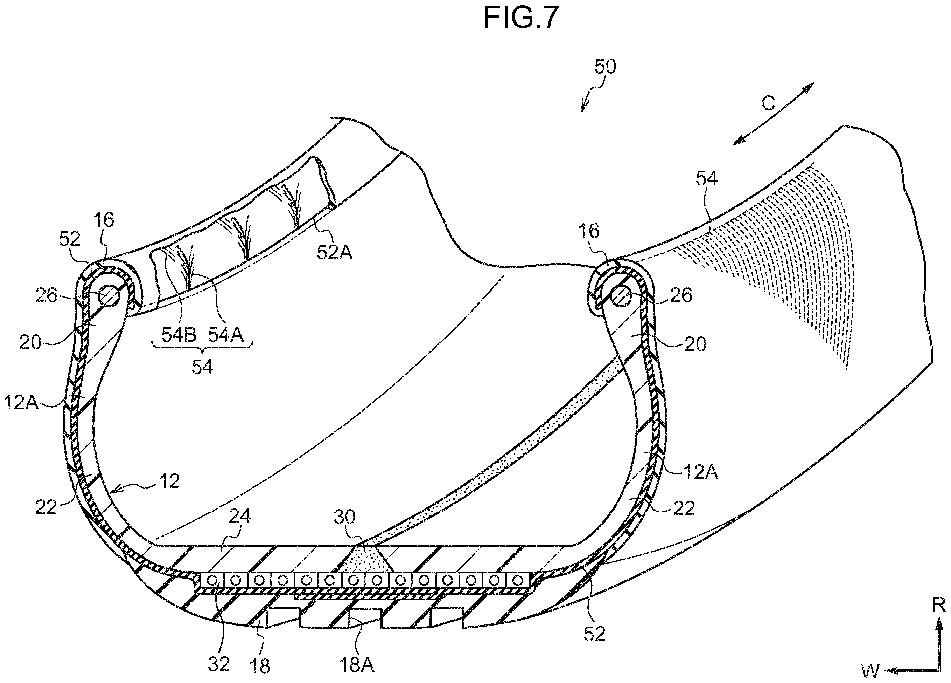

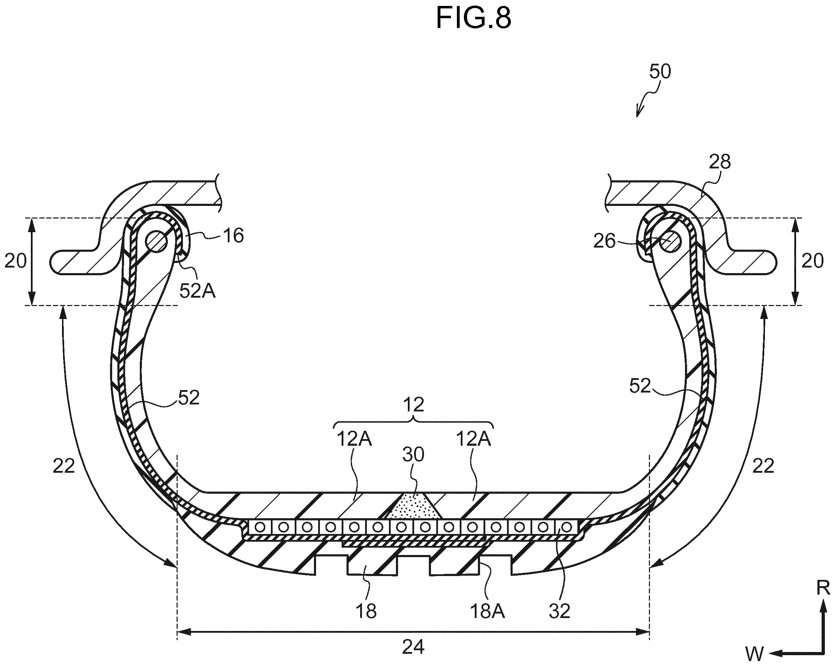

Fig. 6 shows a state in which a reinforcing layer 52 according to the present exemplary embodiment is stretched out flat before being arranged onto the tire carcass member 12. As shown in Fig. 7 and Fig. 8, a tire 50 according to the third exemplary embodiment includes a pair of the reinforcing layer 52.

Similarly to the reinforcing layers 14 and 42 according to the first and second exemplary embodiments, the reinforcing layer 52 is formed by covering plural reinforcing cords 54 that extend in the radial direction with rubber. As shown in Fig. 6, the respective lengths of the reinforcing cords 54 vary periodically along the tire circumferential direction.

In specific terms, the width of the reinforcing layer 52 varies periodically between maximum width portions 56 and minimum width portions 58. The longest reinforcing cords 54 are embedded in the maximum width portions 56 and the shortest reinforcing cords 54 are embedded in the minimum width portions 58.

Only long reinforcing cords 54A extend to an end portion 52A at one side of the short direction of the reinforcing layer 52. Therefore, the end portion 52A has a shape that is periodically notched from the maximum width portions 56 to the minimum width portions 58.

When the reinforcing layer 52 is being arranged onto the tire carcass member 12, the end portion 52A to which only the long reinforcing cords 54A extend is disposed so as to be located at the tire radius direction inner side. In specific terms, as shown in Fig. 7, the pair of reinforcing layers 52 are disposed such that the end portions 52A are located at the inner periphery faces of the bead portions 20 of the tire carcass member 12.

At this time, short reinforcing cords 54B only reach to the outer periphery face of each bead portion 20; only the long reinforcing cords 54A reach to the inner periphery face of the bead portion 20. Therefore, there is no risk of the reinforcing cords 54 being superposed with one another at the bead portion 20.

The end portion at the tire radius direction inner side of each covering rubber layer 16 extends to the inner periphery face of the corresponding bead portion 20 of the tire carcass member 12. Thus, the end portion 52A of the reinforcing layer 52 is covered by the covering rubber layer 16.

The reinforcing layer 52 is bent back from the inner periphery face of the bead portion 20 to the outer periphery face of the bead portion 20 and extends across the outer periphery face of the side portion 22 to the outer periphery face of the belt layer 32. Here, the end portions at the tire radius direction outer sides of the pair of reinforcing layers 52 are superposed with the outer periphery faces of the belt layer 32.

Each reinforcing layer 52 is superposed with one another, at locations that may be any of locations at the tire radius direction outer side of the crown portion 24. However, it is desirable if the reinforcing layer 52 is superposed at locations at the tire radius direction outer side of the bonding member 30 that is the bonding portion between the tire pieces 12A of the tire carcass member 12.

Now, operation and effects of the tire 50 according to the present exemplary embodiment are described. In the tire 50 according to the present exemplary embodiment, the end portion at the tire radius direction outer side of each reinforcing layer 52 is superposed with one another.

Therefore, transmission of an impact from the outer periphery side of the tread rubber 18 to the tire carcass member 12 may be suppressed and the cut resistance may be improved. Further, because more tension may be borne by the reinforcing layers 52, the pressure resistance may also be improved.

Because the respective lengths of the reinforcing cords 54 of each reinforcing layer 52 vary periodically along the tire circumferential direction, the short reinforcing cords 54B only reach to the outer periphery face of the bead portion 20 and only the long reinforcing cords 54A reach to the inner periphery face of the bead portion 20.

Therefore, when the reinforcing layer 52 is being arranged onto the tire carcass member 12, there is no risk of the reinforcing cords 54 being superposed with one another at the side at which the bead portion 20 is disposed, at which the diameter is smaller than at the side portion 22. Thus, the formation of creases in the reinforcing layer 52 may be suppressed.

### - Alternative Embodiments -

Examples of embodiments of the present invention have been described, but the present invention is not limited to the above exemplary embodiments and numerous alternative embodiments may be embodied within the technical scope of the invention.

For example, although the reinforcing layers 14, 42 and 52 described above are arranged to extend all the way round the tire circumferential direction, a reinforcing layer may be formed by arraying a plural number of reinforcing layer pieces that extend in the radial direction in the tire circumferential direction.

In this case, if respective shapes of the reinforcing layer pieces are tapered toward end portions thereof that are disposed at the tire radius direction inner side, there is no risk of the reinforcing layer pieces being superposed with one another at the side of the bead portion 20 at which the diameter is smaller.

In the second exemplary embodiment, plural notches may be formed at the end portion at the tire radius direction outer side and the reinforcing layer 42 may be disposed to match up with the bead portion 20, and plural notches are not formed at the end portion 42A at the tire radius direction inner side of the reinforcing layer 42.

In this case, when the reinforcing layer 42 is being arranged onto the tire carcass member 12, the reinforcing layer 42 may be disposed in a state in which gaps in the region of the notches are wider at the side portion 22, at which the diameter is larger than at the bead portion 20. Therefore, the formation of creases in the reinforcing layer 42 may be suppressed.

The first to third exemplary embodiments described above may be combined as appropriate. For example, the reinforcing layer 14 according to the first exemplary embodiment may be structured to include the notches 46 similarly to the reinforcing layer 42 according to the second exemplary embodiment. Further, the tire 50 according to the third exemplary embodiment may be provided with the crown support layer 49 similarly to the tire 40 according to the second exemplary embodiment.

## Claims

1. A tire (10, 40, 50) comprising:
a tire carcass member (12) fabricated of resin that includes:
a bead portion (20) covering a bead core (26),
a side portion (22) extending to a tire radius direction outer side from the bead portion (20), and
a crown portion (24) extending to a tire width direction inner side from the side portion (22); and
a reinforcing layer (14, 42, 52) provided with a plurality of cords (34, 44, 54) that are covered with resin or rubber, **characterised in that** the reinforcing layer extends from the bead portion (20) of the tire carcass member (12) toward the side portion (22) and covers at least an outer periphery face of the side portion (22).

2. The tire (10, 40, 50) according to claim 1, wherein an end portion at a tire radius direction inner side of the reinforcing layer (14, 42, 52) extends at least to a position that overlaps in a tire width direction with a rim (28) to which the tire carcass member (12) is to be assembled.

3. The tire (10, 40, 50) according to claim 2, wherein the end portion at the tire radius direction inner side of the reinforcing layer (14, 42, 52) extends from the outer periphery face of the side portion (22) across an outer periphery face of the bead portion (20) to an inner periphery face of the bead portion (20).

4. The tire (10, 40, 50) according to any one of claims 1 to 3, wherein the reinforcing layer (14, 42, 52) extends from the bead portion (20) of the tire carcass member (12) to a corresponding outer periphery face of the crown portion (24).

5. The tire (10, 40, 50) according to claim 4, wherein
a crown reinforcing layer (48) is provided at the tire radius direction outer side of the crown portion (24), and
the crown reinforcing layer (48) is superposed with an end portion at the tire radius direction outer side of the reinforcing layer (14, 42, 52).

6. The tire according to any one of claims 1 to 5, wherein a plurality of notches (46) in the tire radius direction are formed in an end portion (42A) at a tire radius direction inner side of the reinforcing layer (14, 42, 52).

7. The tire (10, 40, 50) according to any one of claims 1 to 6, wherein:
the plurality of cords (34, 44, 54) of the reinforcing layer (14, 42, 52) respectively extend in a radial direction and are arrayed in a tire circumferential direction, and
lengths of the plurality of cords (34, 44, 54) vary periodically along a tire circumferential direction.

8. The tire (10, 40, 50) according to any one of claims 1 to 7, wherein a rubber covering layer (16) is provided at an outer periphery face of the reinforcing layer (14, 42, 52), the rubber covering layer (16) extending from the bead portion (20) to the crown portion (24).

9. The tire (10, 40, 50) according to any one of claims 1 to 8, wherein a crown support layer (49) is provided at an outer periphery face of the tire carcass member (12), the crown support layer (49) being provided with a plurality of cords (34, 44, 54) covered with resin, and the crown support layer (49) being disposed so as to extend across a central portion in the tire width direction of the tire carcass member (12).

## Patentansprüche

1. Reifen (10, 40, 50), umfassend:
ein aus Harz hergestelltes Reifenkarkassenelement (12), das Folgendes beinhaltet:
einen Wulstabschnitt (20), der einen Wulstkern (26) bedeckt,
einen Seitenabschnitt (22), der sich zu einer Reifenradiusrichtungsaußenseite von dem Wulstabschnitt (20) erstreckt, und
einen Kronenabschnitt (24), der sich zu einer Reifenbreitenrichtungsinnenseite von dem Seitenabschnitt (22) erstreckt; und
eine Verstärkungsschicht (14, 42, 52), die mit einer Vielzahl von Kabeln (34, 44, 54) versehen ist, die mit Harz oder Gummi bedeckt sind, **dadurch gekennzeichnet, dass** sich die Verstärkungsschicht von dem Wulstabschnitt (20) des Reifenkarkassenelements (12) in Richtung des Seitenabschnitts (22) erstreckt und mindestens eine Außenumfangsfläche des Seitenabschnitts (22) bedeckt.

2. Reifen (10, 40, 50) nach Anspruch 1, wobei sich ein Endabschnitt an einer Reifenradiusrichtungsinnenseite der Verstärkungsschicht (14, 42, 52) mindestens zu einer Position erstreckt, die sich in einer Reifenbreitenrichtung mit einer Felge (28) überschneidet, an der das Reifenkarkassenelement (12) angebracht werden soll.

3. Reifen (10, 40, 50) nach Anspruch 2, wobei sich der Endabschnitt an der Reifenradiusrichtungsinnenseite der Verstärkungsschicht (14, 42, 52) von der Außenumfangsfläche des Seitenabschnitts (22) über eine Außenumfangsfläche des Wulstabschnitts (20) zu einer Innenumfangsfläche des Wulstabschnitts (20) erstreckt.

4. Reifen (10, 40, 50) nach einem der Ansprüche 1 bis 3, wobei sich die Verstärkungsschicht (14, 42, 52) von dem Wulstabschnitt (20) des Reifenkarkassenelements (12) zu einer entsprechenden Außenumfangsfläche des Kronenabschnitts (24) erstreckt.

5. Reifen (10, 40, 50) nach Anspruch 4, wobei
eine Kronenverstärkungsschicht (48) an der Reifenradiusrichtungsaußenseite des Kronenabschnitts (24) bereitgestellt ist und
die Kronenverstärkungsschicht (48) von einem Endabschnitt an der Reifenradiusrichtungsaußenseite der Verstärkungsschicht (14, 42, 52) überlagert wird.

6. Reifen nach einem der Ansprüche 1 bis 5, wobei eine Vielzahl von Nuten (46) in der Reifenradiusrichtung an einem Endabschnitt (42A) an einer Reifenradiusrichtungsinnenseite der Verstärkungsschicht (14, 42, 52) gebildet ist.

7. Reifen (10, 40, 50) nach einem der Ansprüche 1 bis 6, wobei:
sich die Vielzahl von Kabeln (34, 44, 54) der Verstärkungsschicht (14, 42, 52) jeweils in einer radialen Richtung erstrecken und in einer Reifenumfangsrichtung angeordnet sind und
Längen der Vielzahl von Kabeln (34, 44, 54) in regelmäßigen Abständen entlang einer Reifenumfangsrichtung variieren.

8. Reifen (10, 40, 50) nach einem der Ansprüche 1 bis 7, wobei eine Gummideckschicht (16) an einer Außenumfangsfläche der Verstärkungsschicht (14, 42, 52) bereitgestellt ist, wobei sich die Gummideckschicht (16) von dem Wulstabschnitt (20) zu dem Kronenabschnitt (24) erstreckt.

9. Reifen (10, 40, 50) nach einem der Ansprüche 1 bis 8, wobei eine Kronenstützschicht (49) an einer Außenumfangsfläche des Reifenkarkassenelements (12) bereitgestellt ist, wobei die Kronenstützschicht (49) mit einer Vielzahl von mit Harz bedeckten Kabeln (34, 44, 54) bereitgestellt ist und die Kronenstützschicht (49) derart positioniert ist, dass sie sich über einen zentralen Abschnitt in der Reifenbreitenrichtung des Reifenkarkassenelements (12) erstreckt.

## Revendications

1. Pneu (10, 40, 50) comprenant :
un élément de carcasse de pneu (12) fabriqué à partir de résine, qui comprend :
une partie talon (20) recouvrant une tringle de talon (26),
une partie côté (22) s'étendant vers un côté extérieur dans la direction radiale du pneu à partir de la partie talon (20), et
une partie couronne (24) s'étendant vers un côté intérieur dans la direction de la largeur du pneu à partir de la partie côté (22) ; et
une couche de renfort (14, 42, 52) munie d'une pluralité de câbles (34, 44, 54) qui sont recouverts de résine ou de caoutchouc, **caractérisé en ce que** la couche de renfort s'étend à partir de la partie talon (20) de l'élément de carcasse de pneu (12) vers la partie côté (22) et recouvre au moins une face de périphérie extérieure de la partie côté (22).

2. Pneu (10, 40, 50) selon la revendication 1, dans lequel une partie extrémité au niveau d'un côté intérieur, dans la direction radiale du pneu, de la couche de renfort (14, 42, 52) s'étend au moins vers une position qui chevauche, dans une direction de la largeur du pneu, une jante (28) sur laquelle doit être assemblé l'élément de carcasse de pneu (12).

3. Pneu (10, 40, 50) selon la revendication 2, dans lequel la partie extrémité au niveau du côté intérieur, dans la direction radiale du pneu, de la couche de renfort (14, 42, 52) s'étend à partir de la face de périphérie extérieure de la partie côté (22) sur une face de périphérie extérieure de la partie talon (20) vers une face de périphérie intérieure de la partie talon (20).

4. Pneu (10, 40, 50) selon l'une quelconque des revendications 1 à 3, dans lequel la couche de renfort (14, 42, 52) s'étend à partir de la partie talon (20) de l'élément de carcasse de pneu (12) vers une face de périphérie extérieure correspondante de la partie couronne (24).

5. Pneu (10, 40, 50) selon la revendication 4, dans lequel
une couche de renfort de couronne (48) est fournie au niveau du côté extérieur, dans la direction radiale du pneu, de la partie couronne (24), et
la couche de renfort de couronne (48) est superposée à une partie extrémité au niveau du côté extérieur, dans la direction radiale du pneu, de la couche de renfort (14, 42, 52).

6. Pneu selon l'une quelconque des revendications 1 à 5, dans lequel une pluralité d'encoches (46) dans la direction radiale du pneu sont formées au sein d'une partie extrémité (42A) au niveau d'un côté intérieur, dans la direction radiale du pneu, de la couche de renfort (14, 42, 52).

7. Pneu (10, 40, 50) selon l'une quelconque des revendications 1 à 6, dans lequel :
la pluralité de câbles (34, 44, 54) de la couche de renfort (14, 42, 52) s'étendent respectivement dans une direction radiale et sont étalés dans une direction circonférentielle du pneu, et
des longueurs de la pluralité de câbles (34, 44, 54) varient de manière périodique le long d'une direction circonférentielle du pneu.

8. Pneu (10, 40, 50) selon l'une quelconque des revendications 1 à 7, dans lequel une couche de recouvrement en caoutchouc (16) est fournie au niveau d'une face de périphérie extérieure de la couche de renfort (14, 42, 52), la couche de recouvrement en caoutchouc (16) s'étendant à partir de la partie talon (20) vers la partie couronne (24).

9. Pneu (10, 40, 50) selon l'une quelconque des revendications 1 à 8, dans lequel une couche de support de couronne (49) est fournie au niveau d'une face de périphérie extérieure de l'élément de carcasse de pneu (12), la couche de support de couronne (49) étant munie d'une pluralité de câbles (34, 44, 54) recouverts de résine, et la couche de support de couronne (49) étant agencée de manière à s'étendre sur une partie centrale dans la direction de largeur de pneu de l'élément de carcasse de pneu (12).
